# EUROPEAN PATENT APPLICATION

(11) **EP 2 403 104 A2**
(43) Date of publication of application: **04.01.2012**
(21) Application number: 10746416.6
(22) Date of filing: 24.02.2010
(51) Int. Cl.: H02J 7/00, H02J 7/02

(54) **MOBILE PHONE CHARGING DEVICE FOR ISOLATING STANDBY POWER**

(30) Priority: 24.02.2009 KR 20090015096; 29.06.2009 KR 20090058373; 16.10.2009 KR 20090098815
(71) Applicant: Kim, Chang Ho, Seoul 156-010 (KR)
(72) Inventor: Kim, Chang Ho, Seoul 156-010 (KR)
(74) Representative: Jenkins, Richard Gavin
(86) International application number: PCT/KR2010/001143
(87) International publication number: WO 2010/098577

(57) **Abstract**

A portable phone charger for shutting off standby power is provided, in which a standby power shut-off unit is provided at a predetermined position within a jack, and brings one contact point and the other contact point of an AC power cable into contact or separates the contact points from each other to shut off standby power from the portable phone charger, and a controller measures current flowing through the portable phone charger, determines whether standby power is generated in the portable phone charger by comparing the measured current with a reference current, and supplies power to the standby power shut-off unit to separate the one contact point from the other contact point, upon sensing the standby power.

## Description

### [Technical Field]

The present invention relates to a portable phone charger, and more particularly, to a portable phone charger for shutting off standby power.

### [Background Art]

Owing to the development of the electronic industry, there are a growing number of semiconductor-based electronic products. Even though electronic products are powered off, they consume standby power constantly. Standby power accounts for 11% to 15% of power consumption in households and offices. Statistics say that standby power causes hundreds of billion wons of power waste.

Energy can be saved by reducing standby power. The resulting decrease in CO₂ emission for power production can delay environmental contamination and global warming. Therefore, nations all over the world have set a standby power criterion to reduce standby power and have encouraged the development of technologies for reducing standby power in cooperation with business sectors.

Standby power can be reduced by installing a switch to a multi-outlet power strip and thus switching on/off power. However, this technique is not effective because power shutoff is inconvenient.

Especially, the demands for portable phones are growing worldwide. Portable phone users generally charge their batteries with portable phone chargers once a day. Even when they do not use the portable phone chargers, they don't usually unplug them. As a consequence, the standby power of the portable phone chargers will increase power waste. Conventionally, unless portable phone chargers are unplugged after charging, they consume standby power. Accordingly, there exists a need for shutting off standby power from a portable phone charger.

### [Disclosure]

### [Technical Problem]

An aspect of embodiments of the present invention is to address at least the problems and/or disadvantages and to provide at least the advantages described below. Accordingly, an aspect of embodiments of the present invention is to provide a portable phone charger for shutting off standby power in order to conserve power within the portable phone charger, while providing convenience to a portable phone user.

### [Technical Solution]

The object of the present invention can be achieved by providing a portable phone charger for shutting off standby power, in which a standby power shut-off unit is provided at a predetermined position within a jack, and brings one contact point and the other contact point of an AC power cable into contact or separates the contact points from each other to shut off standby power from the portable phone charger, and a controller measures current flowing through the portable phone charger, determines whether standby power is generated in the portable phone charger by comparing the measured current with a reference current, and supplies power to the standby power shut-off unit to separate the one contact point from the other contact point, upon sensing the standby power.

### [Advantageous Effects]

The present invention that operates as described above has the following benefits.

A portable phone charger according to the present invention is configured such that only when a portable phone is charged, power is supplied and when the portable phone is removed from the portable phone charger or a battery of the portable phone is fully charged, AC power is perfectly shut off from the portable phone charger. Therefore, power can be conserved, compared to a conventional portable phone charger.

Because a user does not need unplug the portable phone charger to shut off block power, user convenience is maximized.

### [Brief Description of the Drawings]

The above and other objects, features and advantages of certain exemplary embodiments of the present invention will be more apparent from the following detailed description taken in conjunction with the accompanying drawings, in which:
FIG. 1 illustrates the configuration of a general portable phone charger;
FIG. 2 illustrates the configuration of a portable phone charger according to an embodiment of the present invention;
FIG. 3 illustrates a portable phone connected to the portable phone charger according to the embodiment of the present invention;
FIG. 4 is a circuit diagram of the portable phone charger according to the embodiment of the present invention;
FIG. 5 illustrates the configuration of a portable phone charger according to another embodiment of the present invention;
FIG. 6 illustrates a portable phone connected to the portable phone charger according to the second embodiment of the present invention;
FIG. 7 illustrates the configuration of a standby power shut-off unit according to the second embodiment of the present invention;
FIGs. 8 to 11 illustrate a mechanical operation of the standby power shut-off unit according to the second embodiment of the present invention; and
FIG. 12 is a circuit diagram of the portable phone charger according to the second embodiment of the present invention.

### [Best Mode]

Reference will now be made in detail to the preferred embodiments of the present invention with reference to the accompanying drawings. In some instances, known structures and devices are omitted, focusing on important features of the structures and devices, so as not to obscure the concept of the present invention. In addition, although the terms used in the present invention are selected from generally known and used terms, some of the terms mentioned in the description of the present invention have been selected by the applicant at his or her discretion, the detailed meanings of which are described in relevant parts of the description herein. Furthermore, the present invention must be understood, not simply by the actual terms used but by the meanings of each term lying within.

The present invention provides a portable phone charger (or a portable phone charging device) for shutting off standby power. While the following description is given with the appreciation that a portable phone is directly connected to the portable phone charger, it is purely exemplary. Hence, it is to be clearly understood to those skilled in the art that a charging battery case may be connected to the portable phone charger.

Now a detailed description will be given of preferred embodiments of the present invention with reference to the attached drawings.

### Embodiment 1

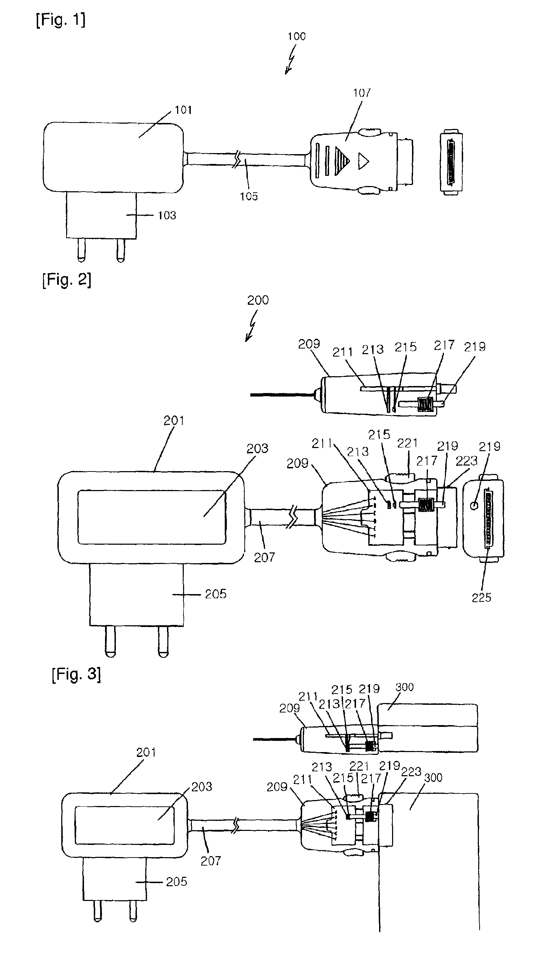

FIG. 1 illustrates the configuration of a general portable phone charger. Referring to FIG. 1, a portable phone charger 100 includes a charger 101, a plug 103, a cable 105, and a jack 107.

The charger is provided with a charger printed circuit board (PCB, not shown). The charger PCB converts AC power received through the plug 103 of the portable phone charger into charging DC power.

The jack is connected to a portable phone or a charging battery case during charging. The jack includes LEDs for indicating the charging state of the portable phone to a user.

FIG. 2 illustrates the configuration of a portable phone charger according to an embodiment of the present invention.

Referring to FIG. 2, a portable phone charger 200 includes a charger 201, a plug 205, a cable 207, and a jack 209. The charger 201 is provided with a charger PCB 203. The jack 209 includes a jack PCB 211, a first contact point 213, a second contact point 215, a spring 217, a stroke 219, a connector 225, and a lock 223.

Other components of the portable phone charger and their operations, which are not related to the subject matter of the present invention, will not be described herein.

The jack PCB 211, the spring 217, and the stroke 219 are provided at predetermined positions inside the jack 209, while the first and second contact points 213 and 215 are positioned on the jack PCB 201. The stroke functions to bring the first and second contact points 213 and 215 into contact or separate them from each other. If the first and second contact points 213 and 215 are brought into contact, AC power is supplied into the portable phone charger. When the first and second contact points 213 and 215 are separated from each other, AC power is shut off from the portable phone charger.

While the stroke 219 is shown as positioned on a left top side of the connector 225, it is clear to those skilled in the art that the stroke 219 may be placed at any other position of the jack 209. For example, the stroke 219 may be installed at the connector 225.

FIG. 3 illustrates a portable phone 300 connected to the portable phone charger 200 according to the embodiment of the present invention. With reference to FIG. 3, a mechanical operation of the portable phone charger according to the present invention will be described in detail.

When the portable phone charger 200 is connected to the portable phone 300, the stroke 219 protruding from one sectional surface of the jack 209 engaged with the portable phone is pushed into one side surface of the portable phone 300. Thus the spring 217 contracts until the stroke 219 pushes the second contact point 215 to the first contact point 213. When the jack 209 of the portable phone charger 200 is completely connected to a charging port of the portable phone 300, it is locked to the portable phone 300 by the lock 223.

As the first contact point 213 contacts the second contact point 215 on the jack PCB 211, ports E and F of the jack PCB 211 are connected to ports e and f of the charger PCB 203 by a cable and thus power is supplied to the portable phone charger 200.

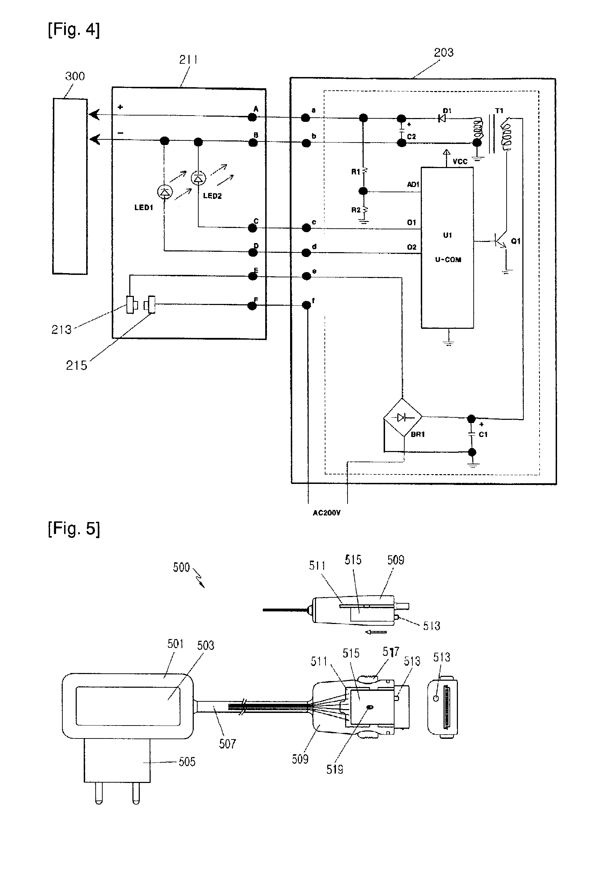

FIG. 4 is a circuit diagram of the portable phone charger according to the embodiment of the present invention. With reference to FIG. 4, an electrical operation of the portable phone charger according to the present invention will be described in detail.

The charger PCB 203 is electrically connected to the jack PCB 211, including a rectifier and a controller. The controller may be, for example, a microcomputer U1.

The rectifier includes a rectifying bridge BR1 and a capacitor C1, and functions to rectify AC power received through an outlet of the portable phone charger to DC power.

The DC power is supplied to a voltage converter T1. The microcomputer U1 controls the secondary voltage of the voltage converter T1 by controlling the turn-on period of a transistor Q1. The secondary voltage induced by the voltage converter T1 is rectified to a charging voltage and smoothed by a rectification and smoothing unit including a diode D1 and a capacitor C2. Then the charging voltage is supplied to the jack PCB 211 via a port A-a and a port B-b and then to a charging port of the portable phone 300.

While a portable phone battery is being charged, the microcomputer U1 notifies charging in progress by setting an output port 01 to be 'high' and thus illuminating a second LED (LED 2) of the jack PCB 211. The output port 01 of the charger PCB is connected to a port c and the port c is connected to LED 2 via a port C of the jack PCB.

To control the charging state and the charging voltage, the microcomputer U1 measures a voltage divided into resistors R1 and R2 through an analog/digital converter AD1. The microcomputer U1 controls the turn-on period of the transistor Q1 using the voltage measured through the analog/digital converter, thereby controlling the charging voltage.

Upon completion of charging the portable phone battery, the microcomputer U2 sets the output port 01 to be 'low' and an output port 02 to be 'high', thereby illuminating a first LED (LED 1) and turning out LED 2. Hence, charging completion is notified. The output port 02 of the charger PCB is connected to a port d and the port d is connected to LED 1 via a port D of the jack PCB.

Upon pressing of a locking knob 221 provided to facilitate removal of the jack 209 from the portable phone 300 after the portable phone battery is fully charged, the lock 223 is also pressed and thus the jack is removed from the portable phone. When the portable phone 200 is separated from the jack 209, the spring 217 returns to its original state and thus the stroke 219 returns to the original position. As a result, the first and second contact points 213 and 215 are separated as illustrated in FIG. 2. Upon separation between the first and second contact points 213 and 215, ports E and F of the jack PCB 211 are disconnected from ports e and f of the charger PCB 203. That is, as a cable is disconnected between the ports E and F, AC power is shut off from the charger PCB and thus power is blocked from the portable phone charger. Therefore, when the portable phone charger is not in use, standby power is automatically shut off from the portable phone charger.

Accordingly, the present invention is configured such that only when a portable phone is charged, power is supplied to a portable phone charger and when the portable phone or a charging battery case is removed from the portable phone charger, power is completely shut off from the portable phone charger. Therefore, standby power is efficiently blocked, compared to a conventional portable phone charger.

### Embodiment 2

Another embodiment of the present invention provides an apparatus for efficiently shutting off standby power from a portable phone charger, when a portable phone is removed from the portable phone charger or a batter of the portable phone is fully charged.

FIG. 5 illustrates the configuration of a portable phone charger according to another embodiment of the present invention.

Referring to FIG. 5, a portable phone charger 500 includes a charger 501, a plug 505, a cable 507, and a jack 509. The jack 509 includes a jack PCB 511, a standby power shut-off unit 515, and a locking knob 517.

Other components of the portable phone charger and their operations, which are not related to the subject matter of the present invention, will not be described herein.

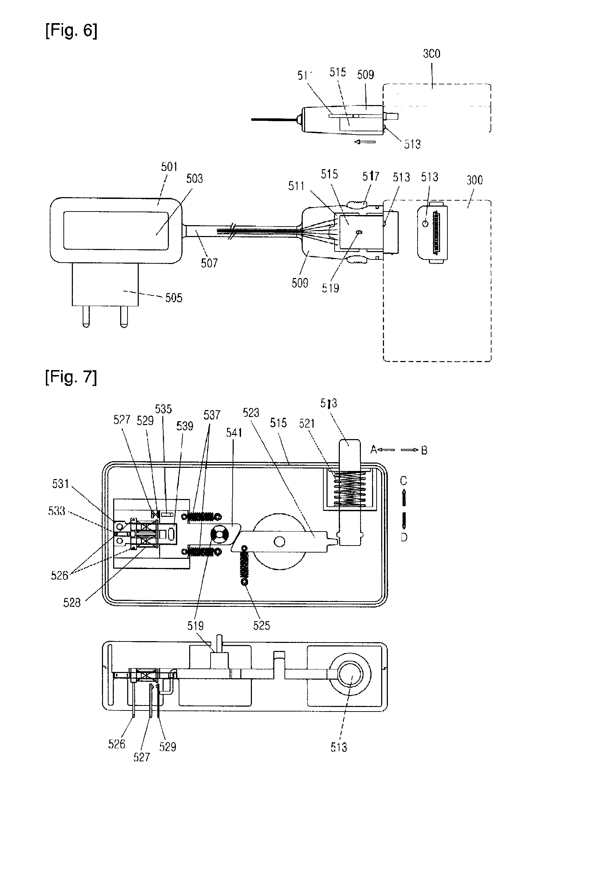

FIG. 6 illustrates a portable phone connected to the portable phone charger according to the second embodiment of the present invention.

Referring to FIG. 6, a knob or knob switch 513 is positioned at the head of the jack 509, protruding from the jack. When the jack 509 of the portable phone charger is connected to the portable phone 300 or a charging battery case, the knob 513 of the jack is pushed in. On the other hand, when the portable phone is removed, the knob 513 of the jack returns to its original state by a knob spring 521.

FIG. 7 illustrates the configuration of the standby power shut-off unit 515 according to the second embodiment of the present invention.

Referring to FIG. 7, the standby power shut-off unit 515 includes the knob 513, the knob spring 521, a lever 523, a lever spring 525, a solenoid coil port 526, a first contact point 5127, a second contact point 529, a core 531, a magnet 533, a solenoid coil 528, a stroke 535, a cam 541, a slide 538, a cam spring 537, and a charging indicator 519. The cam 541, the slide 539, the stroke 535, and the charging indicator 519 may be configured separately, rather than they are integrated. However, these components are shown as integrated, by way of example. The integrated cam 541, the slide 539, the stroke 535, and the charging indicator 519 are collectively referred to as a cam assembly.

The standby power shut-off unit 515 acts as a switch for shutting off AC power from the portable phone charger. That is, when the portable phone 300 is connected to the portable phone charger, the standby power shut-off unit 515 supplies AC power to the portable phone charger. If the portable phone is fully charged or is removed during charging, the standby power shut-off unit 515 automatically shuts off AC power from the portable phone charger.

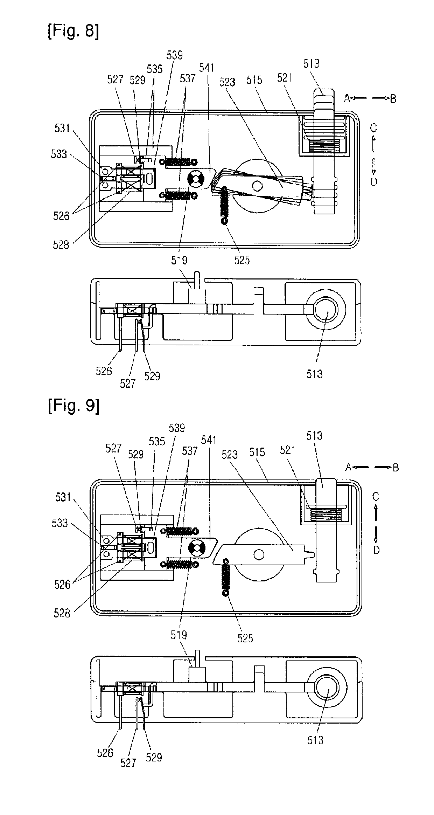

With reference to FIGs. 8 to 11, a mechanical operation of the standby power shut-off unit 515 according to the present invention will be described below in detail.

Referring to FIG. 8, when the portable phone 300 or a charging battery case (not shown) is connected to the jack 509, the knob 513 protruding from the jack 509 is pushed in. Hence, when the knob 513 pushes down the lever 523, the lever 523 rotates clockwise, thereby pushing the cam 541. As a result, the slide 539 integrated with the cam 541 is moved in a direction A.

The core 531 integrated with the magnet 533 draws the slide 539 moved in the direction A. When the core 531 contacts the slide 539, the stroke 535, which is integrated with the cam 541 and formed of an insulation material, moves in the direction A and brings the first and second contact points 527 and 529 into contact. As illustrated in FIG. 9, as the first and second contact points 527 and 529 contact, AC power is supplied to the portable phone charger.

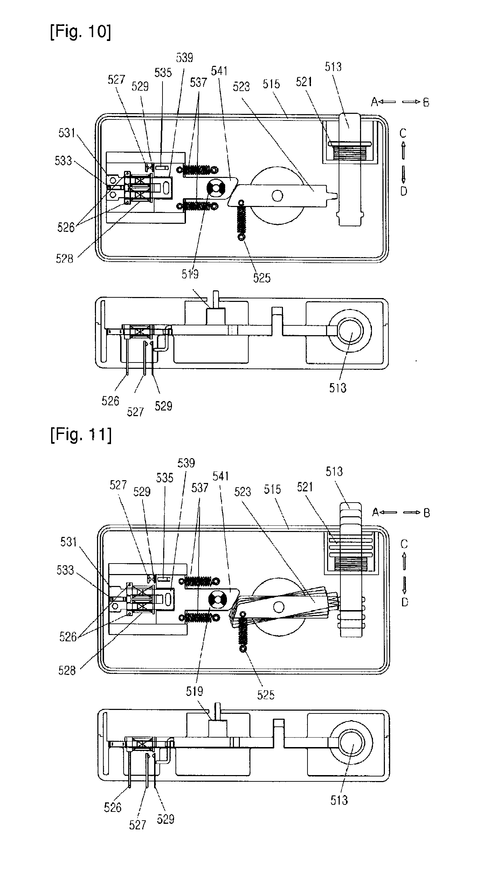

FIG. 10 illustrates the configuration of the standby power shut-off unit, when the portable phone charger is connected to the portable phone and the portable phone is fully charged.

Referring to FIG. 10, if the portable phone is fully charged and thus current flowing through the portable phone is equal to or lower than a reference current, the microcomputer U1 (or controller) of the charger PCB 503 senses it and thus supplies power to the solenoid coil port 526 of the standby power shut-off unit. Upon supply of power to the solenoid coil port 526, the solenoid becomes an electromagnet and exerts repulsive force to the magnet 533. Thus, the slide 539 that contacts the core 531 is moved in a direction B by the cam spring 541 along with the repulsive force to the magnet 533. The cam 541 integrated with the slid also moves in its original direction B, thereby returning the stroke 535 to the original position.

As the stroke 535 returns to its original position, the first contact point 527 is removed from the second contact point 529, thereby shutting off AC power from the portable phone charger. Therefore, when the portable phone is fully charged, standby power can be efficiently shut off from the portable phone charger without disconnecting the portable phone from the portable phone charger.

The charging indicator 519, which is provided at the cam 541, can notify a user that the portable phone has been fully charged.

FIG. 11 illustrates the configuration of the standby power shut-off unit when the portable phone is removed from the portable phone charger.

Referring to FIG. 11, when the portable phone or the charging battery case is removed from the jack 509, the knob 513 is moved in a direction C by the knob spring 521. The knob 513 pushes up the lever and the lever rotates counterclockwise. The other end of the lever moves downward, thus returning to the state of FIG. 7 without contacting the cam 541.

When the portable phone is fully charged and then removed from the portable phone charger, the standby power shut-off unit shuts off standby power, that is, AC power from the portable phone charger.

However, the portable phone may be removed from the portable phone charger during charging. In this case, the portable phone charger operates as follows.

When the portable phone is removed from the portable phone charger during charging, current flowing through the portable phone charger is equal to or lower than a reference current. The microcomputer U1 (or controller) of the charger PCB 503 senses it and thus supplies power to the solenoid coil port 526 of the standby power shut-off unit. Upon supply of power to the solenoid coil port 526, the solenoid becomes an electromagnet and exerts repulsive force to the magnet 533. Thus, the slide 539 that contacts the core 531 is moved in the direction B by the cam spring 541 along with the repulsive force to the magnet 533. The cam 541 integrated with the slid also moves in its original direction B, thereby returning the stroke 535 to the original position.

As the stroke 535 returns to its original position, the first contact point 527 is removed from the second contact point 529, thereby shutting off AC power from the portable phone charger.

Therefore, when the portable phone is fully charged or removed from the portable phone charger in the middle of charging, standby power can be automatically shut off from the portable phone charger.

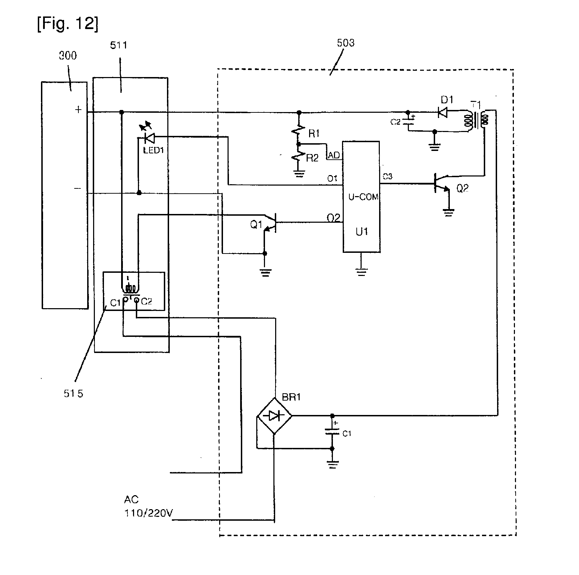

FIG. 12 is a circuit diagram of the portable phone charger according to the second embodiment of the present invention. With reference to FIG. 12, an electrical operation of the portable phone charger according to the present invention will be described in detail.

The charger PCB 503 is electrically connected to the jack PCB 511, including a rectifier and a controller. The controller may be, for example, the microcomputer U1.

The rectifier includes a rectifying bridge BR1 and a capacitor C1, and functions to rectify AC power received through an outlet of the portable phone charger to DC power.

The DC power is supplied to a voltage converter T1. The microcomputer U1 controls the secondary voltage of the voltage converter T1 by controlling the turn-on period of a transistor Q2. The secondary voltage induced by the voltage converter T1 is rectified to a charging voltage and smoothed by a rectification and smoothing unit including a diode D1 and a capacitor C2.

Then the charging voltage is supplied to the jack PCB 211 via a + port and a - port and then to the charging port of the portable phone 300.

While a portable phone battery is being charged, the microcomputer U1 notifies charging in progress by setting an output port 01 to be 'high' and thus illuminating LED 1 of the jack PCB 511.

To control the charging state and the charging voltage, the microcomputer U1 measures a voltage divided into resistors R1 and R2 through an analog/digital converter AD. The microcomputer U1 controls the turn-on period of the transistor Q2 using the voltage measured through the analog/digital converter, thereby controlling the charging voltage.

Upon completion of charging the portable phone battery, the microcomputer U2 sets the output port 01 to be 'low' and an output port 02 to be 'high', thereby turning on the transistor Q1. As the transistor Q1 is turned on, power is supplied to the solenoid port of the standby power shut-off unit. That is, current flows from the collector of the transistor Q1 to the + port through the solenoid port 526 of the standby power shut-off unit 515. As current flows through the solenoid port 526, the solenoid creates a magnetic field and pushes the magnet 533 due to the magnetic field. As illustrated in FIG. 10, the cam 541 returns in the direction B by means of the repulsive force of the magnetic field and the cam spring 537.

The cam 541 integrated with the slide also moves in the original direction B, thereby returning the stroke 535 to the original position. As the stroke 535 returns to the original position, the first contact point 527 is separated from the second contact point 529. Therefore, AC power is shut off from the portable phone charger.

The charging indicator 519 provided at the cam 541 may indicate to the user that the portable phone has been fully charged. The charging indicator 519 may indicate whether the portable phone battery is fully charged or not according to the position of the cam 541.

Therefore, when the portable phone is fully charged, standby power can be efficiently shut off from the portable phone charger without disconnecting the portable phone from the portable phone charger.

The detailed description of the preferred embodiments of the present invention has been given to enable those skilled in the art to implement and practice the invention. Although the invention has been described with reference to the preferred embodiments, those skilled in the art will appreciate that various modifications and variations can be made in the present invention without departing from the spirit or scope of the invention described in the appended claims.

That is, embodiments of the present invention in which standby power is efficiently shut off from a portable phone charger have been described above. However, the present invention is applicable to other chargers having similar technological backgrounds within the scope and spirit of the present invention. Accordingly, the invention should not be limited to the specific embodiments described herein, but should be accorded the broadest scope consistent with the principles and novel features disclosed herein.

## Claims

1. A portable phone charger for shutting off standby power, comprising:
a standby power shut-off unit provided at a predetermined position within a jack, for bringing one contact point and the other contact point of an AC power cable into contact or separating the contact points from each other to shut off standby power from the portable phone charger; and
a controller for measuring current flowing through the portable phone charger, determining whether standby power is generated in the portable phone charger by comparing the measured current with a reference current, and supplying power to the standby power shut-off unit to separate the one contact point from the other contact point, upon sensing the standby power.

2. The portable phone charger of claim 1, wherein the standby power shut-off unit comprises:
a knob switch protruding from the jack, for receding into the jack when the jack is engaged with a portable phone or a charging battery case;
a cam assembly for moving in one direction by the knob switch;
a core including a magnet, for bringing the contact points into contact by drawing the cam assembly using a magnetic force; and
a solenoid for generating a repulsive force to the magnet by receiving power from the controller, thereby separating the one contact point from the other contact point.

3. The portable phone charger of claim 2, wherein the standby power shut-off unit further comprises:
a lever rotatable by the knob switch, for moving the cam assembly in one direction by rotation of the lever; and
a lever spring for returning the lever moved by the rotation to an original state.

4. The portable phone charger of claim 3, wherein the cam assembly comprises:
a cam for moving in one direction by the lever;
a cam spring for returning the cam moved in the direction to an original state;
a stroke integrated with the cam, for bringing the contact points into contact; and
a slide integrated with the cam, for engaging with the core by the magnet.

5. The portable phone charger of claim 1, wherein if the measure current is equal to or lower than the reference current, the controller determines that the standby power is generated in the portable phone charger.
